# EUROPÄISCHE PATENTSCHRIFT

(11) **EP 1 548 355 B1**
(45) Veröffentlichungstag und Bekanntmachung des Hinweises auf die Patenterteilung: **19.05.2010**
(21) Anmeldenummer: 04030453.7
(22) Anmeldetag: 22.12.2004
(51) Int. Cl.: F21V 8/00, F21V 5/04, F21V 14/06, G02B 3/08, F21S 8/10, F21V 14/02

(54) **Stufenlinsenscheinwerfer**
Stepped lens headlamp
Phare avec lentille à échelons

(30) Priorität: 22.12.2003 DE 10361118
(43) Veröffentlichungstag der Anmeldung: 29.06.2005
(73) Patentinhaber: Auer Lighting GmbH, 37581 Bad Gandersheim (DE)
(72) Erfinder: Kittelmann, Rüdiger, 37574 Einbeck (DE); Wagener, Harry, 31061 Alfeld (DE)
(74) Vertreter: Herden, Andreas F.

(56) Entgegenhaltungen:
- EP-A- 1 167 868
- EP-A- 1 384 941
- EP-A2- 1 241 399
- DE-A1- 3 413 310
- DE-A1- 3 919 643
- DE-A1- 3 926 618
- GB-A- 200 647
- US-A- 1 455 929
- US-A- 5 138 540
- US-A- 6 193 388
- US-A1- 2002 024 822
- US-A1- 2002 114 160
- US-A1- 2003 063 466
- US-B1- 6 499 862

## Beschreibung

Die Erfindung betrifft einen Stufenlinsenscheinwerfer, mit einstellbarem Öffnungswinkel des austretenden Lichtbündels, mit einem Reflektor, einer Lampe und mindestens einer Stufenlinse.

Die lichttechnisch relevanten Teile bei gewöhnlichen Stufenlinsenscheinwerfern umfassen in der Regel eine Lampe, eine Stufenlinse (Fresnellinse) und einen sphärischen Hilfsreflektor. Herkömmlich befindet sich die Lampenwendel im Wesentlichen unveränderlich im Kugelmittelpunkt des sphärischen Reflektors. Dadurch wird ein Teil des von der Lampe abgestrahlten Lichts in diese zurückreflektiert und die Lichtabstrahlung in den vorderen Halbraum unterstützt. Dieses nach vorn gerichtete Licht wird durch die Stufenlinse gebündelt. Der Grad der Lichtbündelung ist jedoch von dem Abstand zwischen der Stufenlinse und der Lampe abhängig. Befindet sich die Lampenwendel im Brennpunkt der Stufenlinse, so ergibt sich die engste Lichtbündelung. Dadurch wird ein quasiparalleler Strahlengang, auch Spot genannt, erhalten. Durch Verkürzung des Abstandes zwischen der Stufenlinse und der Lampe wird der Öffnungswinkel des austretenden Lichtbündels stetig vergrössert. Dadurch wird ein divergierender Strahlengang, welcher auch Flood genannt wird, erhalten.

Nachteilig an derartigen Scheinwerfern ist jedoch die schlechte Lichtausbeute insbesondere in deren Spotstellung, da hier nur ein verhältnismässig kleiner Raumwinkelbereich der Lampe durch die Stufenlinse erfasst wird. Ausserdem wirkt es sich nachteilig aus, dass das von dem sphärischen Reflektor reflektierte Licht zu einem grossen Teil die Lampenwendel selbst wieder trifft, dort absorbiert wird und die Lampenwendel zusätzlich aufheizt.

Aus der DE 39 19 643 A1 ist ein Scheinwerfer mit einem Reflektor, einer Blende und einer Stufenlinse bekannt. Mit dem Scheinwerfer wird durch eine Verstellung der Lichtquelle die Aüsleuchtung verändert. Dadurch wird eine Helligkeitsänderung des Lichtes bewirkt. Eine Abstandsregulierung zwischen Scheitelpunkt und Reflektor und zwischen der Blende und dem Reflektor dient der Helligkeitsregulierung.

Aus der DE 34 13 310 A1 ist ein Scheinwerfer mit einer Lampe und einem Reflektor oder einer Lampe und einer Sammellinse bekannt. Der Scheinwerfer weist weiter eine Streuscheibe oder einen Spiegel auf, die beide im Winkel von 45° positioniert sind. Durch den Spiegel wird das Licht abgelenkt und durch die Streuscheibe wird das Licht gestreut. Durch Verschieben der Streuscheibe werden unterschiedliche Abstrahlwinkel des Lichtbündels erzeugt.

Die DE 101 13 385 C1 beschreibt einen Stufenlinsenscheinwerfer, bei welchem die Stufenlinse eine Sammellinse ist, deren lichtquellenseitiger Brennpunkt sich in Spotstellung in etwa im reflektorfernen Brennpunkt des ellipsoiden Reflektors befindet. Somit addieren sich die Abstände der Brennpunkte des Reflektors, die Brennweite des Reflektors und die Brennweite der Stufenlinse zur Mindestlänge eines derartigen Stufenlinsenscheinwerfers. Ferner wird mit einer entsprechend aufwendig zu gestalteten Führung sowohl das Abstandsverhältnis zwischen Lampe und Reflektor als auch das Abstandsverhältnis zwischen Reflektor und Stufenlinse in Abhängigkeit voneinander eingestellt. Hierzu bedarf es jedoch zusätzlicher mechanischer Einrichtungen.

Mit der Erfindung soll jedoch ein Stufenlinsenscheinwerfer geschaffen werden, der eine kompaktere Bauform aufweist und folglich sowohl platzsparender als auch leichter als die herkömmlichen Stufenlinsenscheinwerfer ist. Ferner soll dieser Stufenlinsenscheinwerfer auch einfach und kostengünstig herzustellen sein.

Diese Aufgabe wird auf überraschend einfache Weise mit einem Stufenlinsenscheinwerfer gemäss Anspruch 1 sowie einem Beleuchtungsset gemäss Anspruch 13 gelöst.

Durch Verwendung einer Stufenlinse mit negativer Brennweite, kann eine extrem kompakte Bauform erreicht werden, welche beispielsweise in Spotstellung des Stufenlinsenscheinwerfers im Wesentlichen nur noch der Länge des Reflektors zusammen mit der Dicke der jeweils verwendeten Stufenlinse entspricht.

Mit dem erfindungsgemässen Stufenlinsenscheinwerfer wird ein deutlich verbesserter Lichtwirkungsgrad insbesondere in Spot-, aber auch in Floodstellung erreicht.

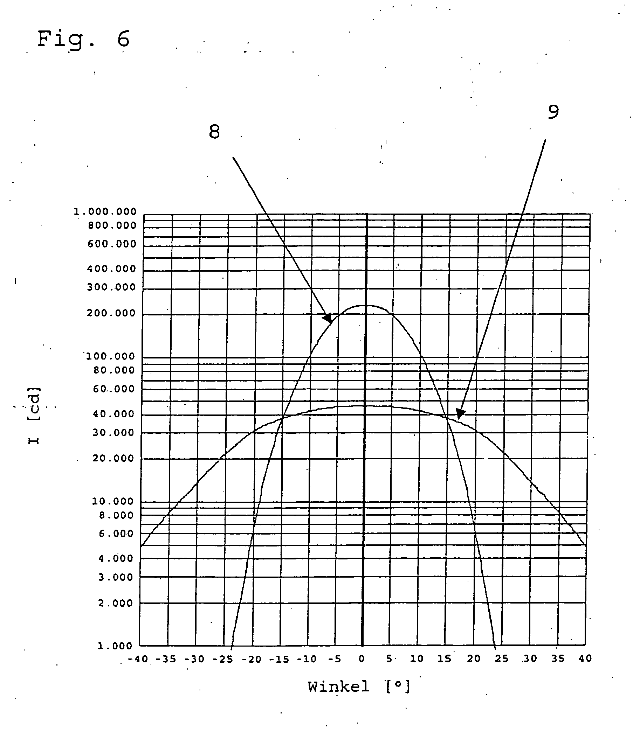

Gleichzeitig wird die Gleichmässigkeit der Beleuchtungsstärke im gesamten Lichtfeld erhalten, wie dieses beispielhaft aus Figur 6 sowohl für die Spot- als auch für eine Floodstellung dargestellt ist.

Erfindungsgemäss ist ein ellipsoider Reflektor mit grosser Apertur vorgesehen. Die Spotstellung wird dadurch eingestellt, dass sich die Lampenwendel eines Schwarzkörperstrahlers, insbesondere einer Halogenlampe oder der Entladungsbogen einer Entladungslampe im reflektorseitigen Brennpunkt des Ellipsoids befindet und der reflektorferne zweite Brennpunkt des Ellipsoids in etwa im negativen oder virtuellen reflektorfernen Brennpunkt der Stufenlinse angeordnet ist.

Das von dem Reflektor reflektierte Licht wird vor Eintritt in die Negativlinse nahezu vollständig auf den reflektorfernen Brennpunkt des Ellipsoids fokussiert. Die sich im reflektorseitigen Brennpunkt befindliche Lampenwendel oder der Entladungsbogen wird nach dem Hindurchtreten durch die Stufenlinse in das Unendliche abgebildet und deren Licht wird somit in einen nahezu paralleles Strahlenbündel überführt.

Das reflektierte Licht trifft im Wesentlichen nicht mehr die Lampenwendel oder den Entladungsbogen. Der virtuelle negative Brennpunkt der Stufenlinse fällt mit dem reflektorfernen Brennpunkt des Reflektorellipsoids zusammen und schafft hiermit eine extrem kompakte Bauform.

Bei zweckmässiger Wahl des Aperturwinklels von Reflektor und Stufenlinse wird das von dem Reflektor reflektierte Licht nahezu vollständig von der Stufenlinse erfasst und als enges Spot-Lichtbündel nach vorne äbgestrahlt.

Die Lichtausbeute ist damit erheblich höher als bei einem herkömmlichen Stufenlinsenscheinwerfer.

Eine Ausführungsform der Erfindung besteht darin, dass der Ellipsoidreflektor aus einem metallischen oder transparenten Material besteht. Bevorzugt werden Glas und polymere Materialien bzw. Kunststoffe verwendet, welche vorteilhaft mit Metall, beispielsweise Aluminium, beschichtet sein können.

Alternativ oder zusätzlich wird zur Herstellung einer reflektierenden Oberfläche eine der beiden oder werden beide Oberflächen des Reflektors mit einem System optisch dünner Schichten versehen. Dadurch werden vorteilhafterweise sichtbare Strahlungsanteile reflektiert und die unsichtbaren Anteile, insbesondere Wärmestrahlungsanteile, durchgelassen.

Eine weitere bevorzugte Ausführungsform der Erfindung umfasst eine metallische Beschichtung auf einer oder beiden Hauptoberflächen des Reflektors.

In weiterer alternativer Ausgestaltung kann der Reflektor auch ein metallischer Reflektor sein, welcher sowohl unbeschichtet als auch dielektrisch oder metallisch beschichtet sein kann, um die erwünschten spektralen und Korrosionseigenschaften bereitzustellen.

Eine bevorzugte Ausführungsform der Erfindung umfasst einen Stufenlinsenscheinwerfer, bei welchem die lichtreflektierende Oberfläche des Reflektors lichtstreuend strukturiert ist und keine, eine oder zwei Oberflächen der Stufenlinse lichtstreuend strukturiert sind. Hierdurch kommt es zu einem festgelegten Anteil der Überlagerung gestreuten Lichts zu geometrisch-optisch abgebildetem Licht, welcher eine Abbildung der Lampe im Lichtfeld vermeidet. Vorzugsweise weist der Reflektor hierzu Teilflächen oder Facetten auf, welche es ermöglichen, dessen lichtstreuende Anteile definiert zu berechnen und zu fertigen.

Mit zunehmender Verkleinerung der Lichtquelle, etwa auf dem wichtigen Gebiet der digitalen Projektion oder bei Hochleistungs-Entladungslampen kann jedoch ein immer stärker ausgeprägterer mittlerer dunkler Bereich auftreten, welcher mit streuenden Einrichtungen innerhalb des Reflektors nicht oder nur noch mit grossen Lichtverlusten kompensiert werden kann. Auch die herkömmlichen, zur Vermeidung einer Abbildung des Emissionszentrums der Lichtquelle verwendeten streuenden Einrichtungen schaffen hier nur bedingt, wenn überhaupt Abhilfe, da auch hierbei in jeder Stellung des Stufenlinsenscheinwerfers mindestens der dunkle-mittige Öffnungskegel homogen ausgeleuchtet werden muss. Gerade hierdurch kommt es jedoch besonders in der Spotstellung zu grossen Lichtverlusten, da hier nur ein dunkler Bereich mit sehr kleinem Öffnungswinkel vorliegt aber bei den herkömmlichen Stufenlinsen mit streuenden Einrichtungen dennoch die volle Fläche der Stufenlinse zur Streuung des Lichtfelds verwendet wird.

Die Erfinder haben herausgefunden, dass diese hohen Lichtverluste auf überraschend einfache Weise vermieden werden können. Besonders vorteilhaft ist es hierbei, wenn die Stufenlinse eine Streuscheibe aufweist, welche in besonders bevorzugter Weise kreisförmig ausgebildet und nur noch im Zentrum der Stufenlinse angeordnet ist.

Bei dieser Ausführungsform können in jeder Stellung des Stufenlinsenscheinwerfers die dunklen Bereiche in der Mitte des Beleuchtungsfelds sehr wirksam vermieden werden, aber es kommt nicht zu den hohen Lichtverlusten in der Spotstellung des Reflektors.

In überraschender Weise zeigt es sich, dass der geometrisch-optische Strahlengang des aus dem Reflektor austretenden Lichts am Ort der Stufenlinse genau dann einen kleineren Bereich ausleuchtet, wenn der benötigte Anteil an gestreutem Licht erhöht ist.

Diese Wirkung haben sich die Erfinder zu nutze gemacht, um mit der Erfindung ein automatisches oder adaptives Lichtmischsystem zu schaffen, welches synchron zu der Verstellung des Stufenlinsenscheinwerfers nur denjenigen Streulichtanteil zum geometrisch-optisch abgebildeten Licht hinzu mischt, welcher für diese Stellung benötigt wird.

Dieses Lichtmischverhältnis, welches nahezu optimal an die jeweils erforderlichen Lichtverteilungen adaptiert werden kann, wird nachfolgend abgekürzt nur noch als Mischverhältnis bezeichnet.

Durch dieses automatische Lichtmischsystem wird im Wesentlichen für jede Stellung des Reflektors das richtige Mischverhältnis und somit stets ein sehr homogen ausgeleuchtetes Lichtfeld geschaffen ohne dass hierbei jedoch unnötige Streuverluste auftreten.

Hierbei kann durch die Wahl des Durchmessers der integrierten Streuscheibe im Verhältnis zur verbleibenden Fläche der Stufenlinse das Mischverhältnis der vollflächig ausgeleuchteten Stufenlinse definiert werden und kann durch die Streueigenschaften der Negativlinse der Öffnungswinkel des gestreuten Lichts definiert werden.

Ferner kann auf der integrierten Streuscheibe selbst die streuende Wirkung variieren, so dass beispielsweise in der Mitte der Streuscheibe stärker streuende Bereiche und an deren Rand weniger stark streuende Bereiche angeordnet sind. Hierdurch wird ein stärker fokussiertes Strahlenbündel zusätzlich noch aufgeweitet und es lassen sich dann extrem breite Ausleuchtungswinkel realisieren.

Alternativ kann auch der Rand der Streuscheibe nicht nur abrupt endend ausgestaltet sein sondern es kann dieser in dessen streuender Wirkung stetig abnehmend gestaltet sein und sich noch unter oder über der Stufenlinse erstrecken. Hierdurch lassen sich weitere Anpassungen an die stellungsabhängigen Mischverhältnisse vornehmen.

Es wird bezug genommen auf die am gleichen Tag eingereichte Anmeldung des selben Anmelders mit dem Titel "Optische Anordnung mit Stufenlinse", deren Offenbarungsgehalt durch Bezugnahme vollständig auch zum Offenbarungsgehalt der vorliegenden Anmeldung gemacht wird.

Erfindungsgemäss ist die Verwendung des Scheinwerfers für Architektur, Medizin, Film, Bühne, Studio und Fotografie sowie in einer Taschenlampe vorgesehen.

Die Streuscheibe kann bei den bevorzugten Ausführungsformen sowohl an der Lichteintritts- als auch an der Lichtaustrittseite angeordnet sein. Ferner besteht die vorteilhafte Möglichkeit, Streuscheiben an der Lichteintritts und an der Lichtaustrittsseite anzuordnen. Bei dieser letztgenannten Ausführungsform können auch verschieden streuende, beispielsweise örtlich verschieden streuende, Streuscheiben verwendet werden.

Die Erfindung wird anhand bevorzugter Ausführungsformen und unter Bezugnahme auf die beigefügten Zeichnungen detaillierter beschrieben.

### Es zeigen:

- Fig. 1: eine Ausführungsform des Stufenlinsenscheinwerfers in Spotstellung, wobei der reflektorferne Brennpunkt des Reflektors in etwa mit dem rechtsseitigen virtuellen Brennpunkt der Stufenlinse überlagert ist,
- Fig. 2: die in Fig. 1 gezeigte Ausführungsform des Stufenlinsenscheinwerfers in einer ersten Floodstellung, wobei der reflektorferne Brennpunkt des Reflektors in etwa in einer reflektornahen Oberfläche der Stufenlinse angeordnet ist,
- Fig. 3: die in Fig. 1 gezeigte Ausführungsform des Stufenlinsenscheinwerfers in einer zweiten Floodstellung mit grösserem Öffnungswinkel, wobei der reflektorferne Brennpunkt des Reflektors vor der reflektorfernen Oberfläche der Stufenlinse durch die Stufenlinse abgebildet wird,
- Fig. 4: die in Fig. 1 gezeigte Ausführungsform des Stufenlinsenscheinwerfers in deren zweiten Floodstellung mit grösserem Öffnungswinkel, wobei mittels eines Hilfsreflektors ein weiterer Teil des Lichts zunächst in den Reflektor und von diesem in die Stufenlinse gelenkt wird,
- Fig. 5: eine Negativstufenlinse mit zentral angeordneter Streuscheibe,
- Fig. 6: eine öffnungswinkelabhängige logarithmische Darstellung der Lichtstärke des Stufenlinsenscheinwerfers in dessen Spot- und in einer von dessen Floodstellungen.

### Detaillierte Beschreibung bevorzugter Ausführungsformen

Bei der nachfolgenden detaillierten Beschreibung wird unterstellt, dass gleiche Bezugszeichen die gleichen oder gleich wirkende Elemente in den jeweiligen verschiedenen Ausführungsformen bezeichnen.

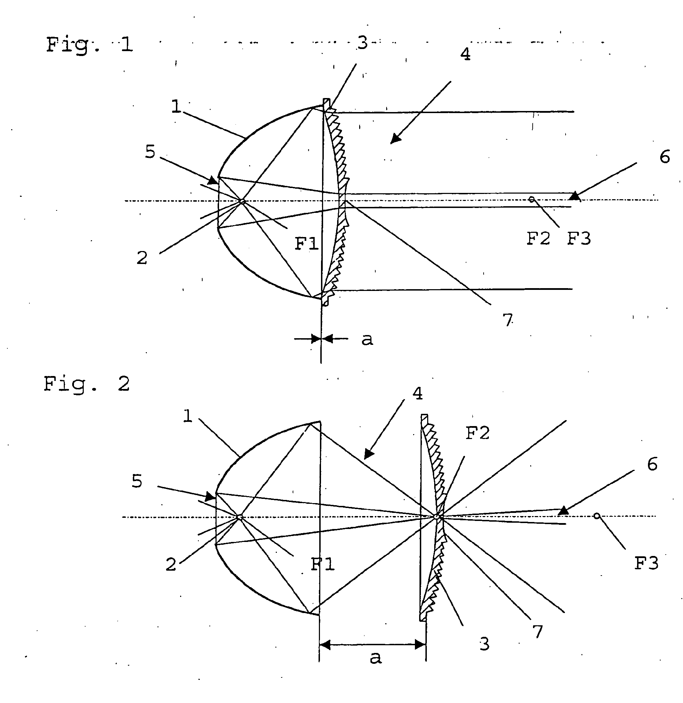

Nachfolgend wird auf Fig. 1 bezug genommen, welche eine Ausführungsform des Stufenlinsenscheinwerfers in Spotstellung zeigt. Der Stufenlinsenscheinwerfer enthält im Wesentlichen einen ellipsoiden Reflektor 1 , eine Lampe 2, welche eine Halogenlampe oder auch eine Entladungslampe sein kann, und eine Stufenlinse 3, welche eine Linse mit negativer Brechkraft, vorzugsweise eine bikonkave Stufenlinse ist.

In Fig. 1 ist der reflektorferne Brennpunkt F2 des ellipsoiden Reflektors 1 in etwa mit dem rechtsseitigen virtuellen oder negativen Brennpunkt F3 der Stufenlinse 3 überlagert.

Das aus dem Scheinwerfer austretende Lichtbündel 4 ist in den Figuren lediglich schematisch durch dessen äussere Randstrahlen angedeutet.

Die Spotstellung wird dadurch eingestellt, dass sich die Lampenwendel oder der Entladungsbogen der Lampe 2 im Wesentlichen im reflektorseitigen Brennpunkt F1 des Reflektorellipsoids 1 angeordnet wird.

Das von dem Reflektor 1 reflektierte Licht wird in dieser Stellung nahezu vollständig auf den reflektorfernen Brennpunkt F2 des Ellipsoids 1 gerichtet. Der rechtsseitige negative oder virtuelle Brennpunkt F3 der Stufenlinse 3fällt dann in etwa mit dem Brennpunkt F2 des Reflektorellipsoids lzusammen.

Es ist in Fig. 1 im Nahfold auch zu erkennen, wie sich die Öffnung 5 innerhalb des Reflektors 1 im parallelen Strahlengang des Lichtfelds 4 als dunkler Bereich 6 auswirkt.

Innerhalb der Stufenlinse 3 ist eine kreisförmige, mittig angeordnete Streuscheibe 7 vorgesehen, welche ein definiertes Streulichtverhältnis und einen definierten Öffnungswinkel des gestreuten Lichts erzeugt. Hierdurch wird ein definiertes Mischverhältnis des gestreuten Lichts relativ zu dem durch die Stufenlinse 3 geometrisch-optisch abgebildeten Licht bereitgestellt.

Alternativ zu dieser Ausführungsform der Streuscheibe 7 ändert sich bei einer weiteren Ausführungsform die streuende Wirkung entlang des Radius der Streuscheibe 7 auf stetige Weise, so dass in der Mitte der Streuscheibe 7 stärker streuende Bereiche und an deren abrupt endendem Rand weniger stark streuende Bereiche angeordnet sind.

In nochmals weiterer alternativer Ausgestaltung ist der Rand der Streuscheibe 7 nicht nur abrupt endend sondern es ist dieser in dessen streuender Wirkung stetig abnehmend ausgebildet und kann sich dieser auch unter die oder über der Stufenlinse erstrecken.

Hierdurch werden systemabhängig weitere Anpassungen an die stellungsabhängigen Mischverhältnisse vorgenommen, so dass der Fachmann stets ein optimales Mischungsverhältnis für ein homogen ausgeleuchtetes Lichtfeld oder auch für Lichtfelder mit definiert erzeugten lokal höheren Intensitäten bereitstellen kann.

Es ist aus Fig. 1 ferner zu erkennen, dass in der Spotstellung nur ein geringer Teil des gesamten Lichts, durch die Streuscheibe 7 tritt.

Durch die Streuscheibe 7 kommt es zu einer sehr homogenen Ausleuchtung, wie dies in Fig. 6, welche eine öffnungswinkelabhängige logarithmische Darstellung der Lichtstärke des Stufenlinsenscheinwerfers zeigt, für die Spotstellung mit der Linie 8 wiedergegeben ist.

Fig. 2 zeigt die in Fig. 1 dargestellte Ausführungsform des Stufenlinsenscheinwerfers in einer ersten Floodstellung, bei welcher der reflektorferne Brennpunkt F2 des Reflektors 1 in etwa in einer reflektornahen Oberfläche der Stufenlinse 3 angeordnet ist.

Hierbei wird der Wert der Verschiebung a gegenüber der Spotstellung durch eine mechanische Führung definiert verändert.

Der Aufbau entspricht grundsätzlich dem in Fig. 1 erläuterten Aufbau des Stufenlinsenscheinwerfers.

Jedoch ist aus Fig. 2 deutlich zu erkennen, dass sowohl der Öffnungswinkel des austretenden Lichtstrahlenbündels 4 als auch der des dunklen Bereichs 6 zugenommen hat.

Da in dieser Stellung jedoch ein sehr hoher Anteil des Lichts nur auf einem sehr kleinen Bereich in der Mitte der Streuscheibe 7 auftrifft, kann gerade dieser Bereich so gestaltet werden, dass dessen Vorwärtsstreukeule in etwa den dunklen Bereich 6 im Fernfeld oder Fernbereich in gewünschter Weise kompensiert. Es sei auch auf Fig. 6 verwiesen, welche die Lichtverhältnisse mit der Linie 9 beispielhaft für eine Floodstellung wiedergibt.

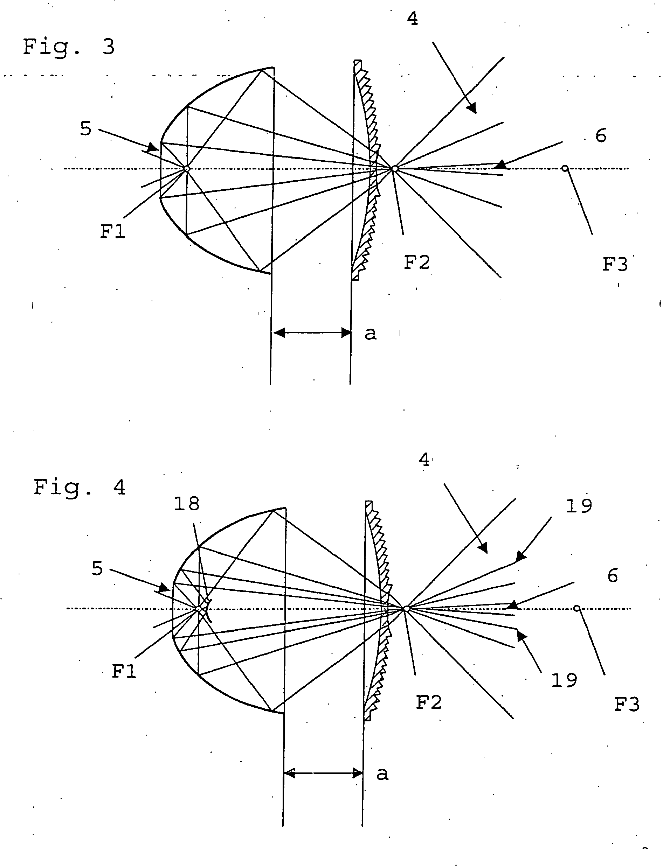

Nachfolgend wird auf Fig. 3 bezug genommen, welche die in Fig. 1 dargestellte Ausführungsform des Stufenlinsenscheinwerfers in einer zweiten Floodstellung mit noch grösserem Öffnungswinkel als in Fig. 2 zeigt, wobei der reflektorferne Brennpunkt F2 des Reflektors 1 vor der reflektorfernen Oberfläche der Stufenlinse 7 durch die Stufenlinse 7 abgebildet wird.

Hierbei wird ein grösserer Bereich der Streuscheibe 7 als in Fig. 2 gezeigt durchleuchtet und kann dessen gesamtes Streuverhalten an die Verhältnisse dieser Floodstellung angepasst werden.

Eine weitere bevorzugte Ausführungsform zeigt Fig. 4. Bei dieser Ausführungsform, die bis auf einen zusätzlichen Hilfsreflektor 18 im wesentlichen den vorstehend beschriebenen Ausführungsformen entspricht, wird durch den Hilfsreflektor 18 Licht der Lampe 2, welches sich in Fig. 4 nach rechts ausbreiten würde und den Reflektor 1 nicht mehr erreichen würde durch Reflexion in den Reflektor 1 gelenkt. Hierdurch kann sowohl das Licht, welches nur beispielhaft durch den Strahlengang 19 dargestellt ist und ohne den Hilfsreflektor nicht zur Beleuchtung beitragen würde genutzt werden sondern es kann auch der ansonsten direkt in die Stufenlinse 3 eintretende Teil des Lichtes besser für die erwünschte Lichtverteilung genutzt werden.

Die Form des Hilfsreflektors 18 ist vorteilhaft so gewählt, dass an diesem reflektiertes Licht nicht wieder in das Leuchtmittel der Lampe 2, beispielsweise eine Wendel oder Entladungszone, eintritt und dieses zusätzlich unnötig erhitzt.

Alternativ kann der Hilfsreflektor 18 auf der Innen- und oder Aussenseite des Glaskörpers der Lampe 2 aufgebracht sein. Hierzu kann das Glas des Lampenkörpers entsprechend geformt sein, um die erwünschte Richtwirkung für das reflektierte Licht zu erreichen.

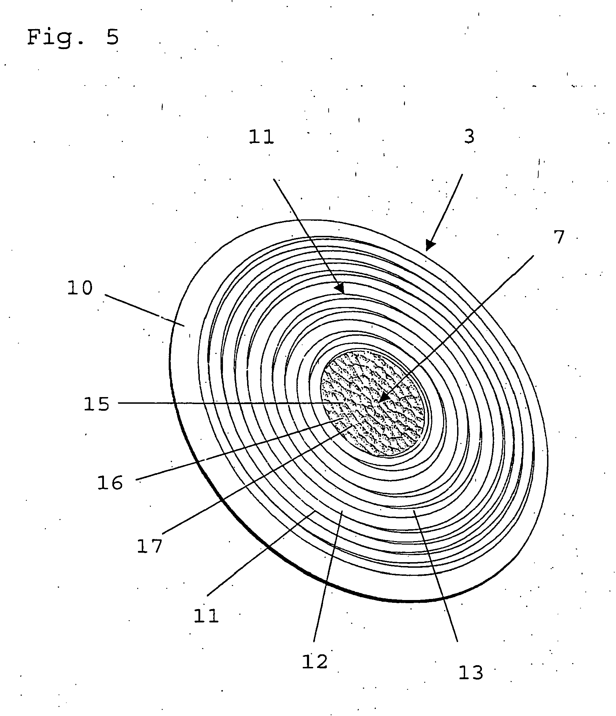

Fig. 5 zeigt beispielhaft eine Stufenlinse 3 mit Streuscheibe 7, wie diese durch die Erfindung verwendet wird. Die Stufenlinse 3 verfügt über einen transparenten Grundkörper 10 sowie ein Stufenlinsenringsystem 11 mit ringförmigen Linsenabschnitten 11, 12, 13, innerhalb dessen die kreisförmige Streuscheibe 7 angeordnet ist.

Die Streuscheibe 7 ist definiert strukturiert oder verfügt über Facetten 15, 16, 17 mit in weiten Bereichen exakt definierbarem Streuverhalten, welche in der deutschen Patentanmeldung DE 103 43 630 des selben Anmelders mit dem Titel "Streuscheibe" beschrieben sind.

Die Erfindung ist jedoch nicht auf diese vorbeschriebenen Ausführungsformen von Streuscheiben beschränkt.

Besonders vorteilhaft findet der vorstehend beschriebene Stufenlinsenscheinwerfer seinen Einsatz in einem Beleuchtungsset zusammen mit einem gegenüber dem Stand der Technik wesentlich verkleinertem elektrischen Netzteil oder Vorschaltgerät. Dieses Netzteil kann bei gegenüber dem Stand der Technik gleicher nutzbarer Lichtleistung sowohl elektrisch als auch mechanisch kleiner gestaltet sein da der erfindungsgemässe Stufenlinsenscheinwerfer über eine wesentlich höhere Lichtausbeute verfügt. Somit wird weniger Gewicht benötigt und bei Transport und Lagerung geringerer Stauraum beansprucht.

Hierdurch wird aber auch, insbesondere bei Verwendung von Kaltlicht-Reflektoren die gesamte thermische Belastung der beleuchteten Personen und Gegenstände reduziert.

Ferner kann der erfindungsgemäße Stufenlinsenscheinwerfer zur Erhöhung der Lichtausbeute vorteilhaft auch in Taschenlampen verwendet werden, bei welchen die verfügbare elektrische Energie prinzipiell stärker begrenzt ist.

### Bezugszeichenliste

- 1: Reflektor
- 2: Lampe
- 3: Stufenlinse
- 4: austretendes Lichtbündel
- 5: Öffnung im Reflektor 1
- 6: dunkler Bereich
- 7: Streuscheibe
- 8: Intensitätsverteilung in Spotstellung
- 9: Intensitätsverteilung in Floodstellung
- 10: Grundkörper
- 11: Stufenlinsenringsystem
- 12: ringförmige Linsenabschnitte
- 13: dto.
- 14: dto.
- 15: Facette
- 16: dto.
- 17: dto.
- 18: Hilfsreflektor
- 19: durch Hilfsreflektor reflektierter Strahlengang

## Patentansprüche

1. Stufenlinsenscheinwerfer mit einstellbarem Öffnungswinkel des austretenden Lichtbündels,
so dass der Stufenlinsenscheinwerfer in einer Spotstellung und in einer Floodstellung angeordnet werden kann, der Stufenlinsenscheinwerfer umfassend einen ellipsoiden Reflektor, eine Lampe und mindestens eine Stufenlinse, wobei die Stufenlinse eine Linse mit negativer Brennweite, somit eine Negativlinse mit virtuellem Brennpunkt ist,
und wobei der virtuelle Brennpunkt der Stufenlinse mit einem reflektorfernen Brennpunkt des Reflektors in Spotstellung des Stufenlinsenscheinwerfers überlagert ist,
wobei die Stufenlinse eine kreisförmig ausgebildete und
nur im Zentrum der Stufenlinse angeordnete integrierte Streuscheibe aufweist, die ein Lichtmischsystem definiert, welches den Anteil des gestreuten Lichts relativ zu dem Anteil des geometrisch-optisch abgebildeten Lichts, somit das Lichtmischverhältnis, in Abhängigkeit von der Stellung des Stufenlinsenscheinwerfers verändert,
und wobei in der Spotstellung nur ein geringer Teil des gesamten Lichts durch die Streuscheibe tritt, und in der Floodstellung ein sehr hoher Anteil des Lichts durch die Streuscheibe tritt.

2. Stufenlinsenscheinwerfer nach Anspruch 1, **dadurch gekennzeichnet, dass** die Stufenlinse eine vorzugsweise bikonkave Negativlinse ist.

3. Stufenlinsenscheinwerfer nach Anspruch 1 oder 2, **dadurch gekennzeichnet, dass** die Stufenlinse eine Doppellinse mit chromatisch korrigierten Abbildungseigenschaften umfasst.

4. Stufenlinsenscheinwerfer nach einem der vorstehenden Ansprüche, **dadurch gekennzeichnet, dass** der Reflektor aus einem metallischen oder transparenten, vorzugsweise dielektrischen Material Glas und/oder Kunststoff besteht.

5. Stufenlinsenscheinwerfer nach einem vorstehenden Ansprüche, wobei mindestens eine der beiden Hauptoberflächen des Reflektors mit einem System optisch dünner Schichten versehen ist.

6. Stufenlinsenscheinwerfer nach einem der vorstehenden Ansprüche, wobei die lichtreflektierende Oberfläche des Reflektors, vorzugsweise Teilflächen oder Facetten aufweisend, lichtstreuend strukturiert ist und keine, eine oder zwei Oberflächen der Stufenlinse zusätzlich zur Streuscheibe lichtstreuend strukturiert sind.

7. Stufenlinsenscheinwerfer nach einem der vorstehenden Ansprüche, **dadurch gekennzeichnet, dass** der Reflektor, die Stufenlinse und/oder die Streuscheibe zumindest einseitig beschichtet sind.

8. Stufenlinsenscheinwerfer nach Anspruch 7, **dadurch gekennzeichnet, dass** die Beschichtung der Stufenlinse ein dielektrisches Interferenz-Schichtsystem umfasst, welches das Spektrum des hindurchtretenden Lichtes verändert.

9. Stufenlinsenscheinwerfer nach einem der vorstehenden Ansprüche, **dadurch gekennzeichnet, dass** mindestens eine der beiden Hauptoberflächen des Reflektors mit Metall, vorzugsweise Aluminium, beschichtet ist.

10. Stufenlinsenscheinwerfer nach einem der vorstehenden Ansprüche, **dadurch gekennzeichnet, dass** die Lampe eine Glühlampe, insbesondere Halogenlampe, ein Leuchtdiode, ein Leuchtdiodenfeld oder eine Gasentladunsglampe ist.

11. Stufenlinsenscheinwerfer nach einem der vorstehenden Ansprüche, **dadurch gekennzeichnet, dass** ein Hilfsreflektor zwischen Stufenlinse und Reflektor angeordnet ist.

12. Stufenlinsenscheinwerfer nach einem der vorstehenden Ansprüche, **dadurch gekennzeichnet, dass** die Stufenlinse an deren Oberfläche vorgespannt, vorzugsweise thermisch vorgespannt ist.

13. Beleuchtungsset umfassend einen Stufenlinsenscheinwerfer nach einem der vorstehenden Ansprüche von 1 bis 12 sowie ein zugeordnetes elektrisches Netzteil oder Vorschaltgerät.

14. Verwendung des Stufenlinsenscheinwerfers nach einem der Ansprüche 1 von bis 12 sowie eines Beleuchtungssets nach Anspruch 13 für Medizin, Architektur, Film, Bühne, Studio und Fotografie.

15. Taschenlampe umfassend einen Stufenlinsenscheinwerfer nach einem der vorstehenden Ansprüche von 1 bis 12.

## Claims

1. Fresnel lens spotlight having an adjustable aperture angle of the emitted light beam,
so that the Fresnel lens spotlight can be disposed in a spot position and in a flood position, the Fresnel lens spotlight including an ellipsoid reflector, a lamp and at least one Fresnel lens,
wherein the Fresnel lens is a lens having a negative focal length, i.e., a negative lens having a virtual focal point,
and wherein the virtual focal point of the Fresnel lens is superimposed with a reflector-remote focal point of the reflector in the spot position of the Fresnel lens spotlight,
wherein the Fresnel lens comprises a circular integrated diffusing screen which is disposed only in the centre of the Fresnel lens and defines a light mixing system which alters the proportion of the scattered light relative to the proportion of the geometrically-optically imaged light, i.e., the light mixing ratio, in dependence upon the position of the Fresnel, lens spotlight,
and wherein in the spot position only a small portion of the entire light passes through the diffusing screen, and in the flood position a very large proportion of the light passes through the diffusing screen.

2. Fresnel lens spotlight as claimed in Claim 1, **characterised in that** the Fresnel lens is a preferably biconcave negative lens.

3. Fresnel lens spotlight as claimed in Claim 1 or 2, **characterised in that** the Fresnel lens includes a double lens having chromatically corrected imaging properties.

4. Fresnel lens spotlight as claimed in any one of the preceding Claims, **characterised in that** the reflector consists of a metallic or transparent, preferably dielectric material, glass and/or synthetic material.

5. Fresnel, lens spotlight as claimed in any one of the preceding Claims, wherein at least one of the two main surfaces of the reflector is provided with a system of optically thin layers.

6. Fresnel lens spotlight as claimed in any one of the preceding Claims, wherein the light-reflecting surface of the reflector, preferably comprising partial surfaces or facets, is structured to scatter light and no, one or two surfaces of the Fresnel lens are structured to scatter light in addition to the diffusing screen.

7. Fresnel lens spotlight as claimed in any one of the preceding Claims, **characterised in that** the reflector, the Fresnel lens and/or the diffusing screen are coated at least on one side.

8. Fresnel lens spotlight as claimed in Claim 7, **characterised in that** the coating of the Fresnel lens includes a dielectric interference layer system which alters the spectrum of the light passing through it.

9. Fresnel lens spotlight as claimed in any one of the preceding Claims, **characterised in that** at least one of the two main surfaces of the reflector is coated with metal, preferably aluminium.

10. Fresnel lens spotlight as claimed in any one of the preceding Claims, **characterised in that** the lamp is an incandescent lamp, in particular a halogen lamp, a light-emitting diode, a light-emitting diode array or a gas discharge lamp.

11. Fresnel lens spotlight as claimed in any one of the preceding Claims, **characterised in that** an auxiliary reflector is disposed between the Fresnel lens and the reflector.

12. Fresnel lens spotlight as claimed in any one of the preceding Claims, **characterised in that** the Fresnel lens is prestressed, preferably thermally prestressed, at its surface.

13. Lighting set including a Fresnel lens spotlight as claimed in any one of the preceding Claims 1 to 12 as well as an associated electrical power supply or ballast.

14. Use of the Fresnel lens spotlight as claimed in any one of Claims 1 to 12 as well as of a lighting set as claimed in Claim 13 in the field of medicine, architecture, film, stage, studio and photography.

15. Torch including a Fresnel lens spotlight as claimed in any one of the preceding Claims 1 to 12.

## Revendications

1. Projecteur à lentille de Fresnel avec angle d'ouverture réglable du faisceau de lumière sortant, de sorte que le phare à lentille de Fresnel peut être disposé dans une position de spot et dans une position de flood, le phare à lentille de Fresnel comprenant un réflecteur ellipsoïde, une lampe et au moins une lentille de Fresnel, la lentille de Fresnel étant une lentille avec une focale négative, donc une lentille négative avec un foyer virtuel, et le foyer virtuel de la lentille de Fresnel étant superposé avec un foyer, éloigné du réflecteur, du réflecteur dans la position de spot du projecteur à lentille de Fresnel,
la lentille de Fresnel présentant un disque diffuseur intégré, conçu avec une forme circulaire et disposée seulement au centre de la lentille de Fresnel, qui définit un système mixte de lumière qui modifie la fraction de lumière diffusée par rapport à la fraction de lumière reproduite au plan géométrique et optique, dont le rapport de mélange de lumière, en fonction de la position du projecteur à lentille dé Fresnel,
et seulement une faible partie de la lumière globale passant par le disque diffuseur dans la position de spot et une fraction très élevée de la lumière passant à travers le disque diffuseur dans la position de flood.

2. Projecteur à lentille de Fresnel selon la revendication 1, **caractérisé en ce que** la lentille de Fresnel présente une lentille négative, de préférence biconcave.

3. Projecteur à lentille de Fresnel selon la revendication 1 ou 2, **caractérisé en ce que** la lentille de Fresnel comporte une lentille double avec des propriétés de reproduction corrigées au plan chromatique.

4. Projecteur à lentille de Fresnel selon l'une quelconque des revendications précédentes, **caractérisé en ce que** le réflecteur est à base d'un matériau métallique ou transparent, de préférence diélectrique, du verre et/ou de la matière plastique.

5. Projecteur à lentille de Fresnel selon l'une quelconque des revendications précédentes, où au moins l'une des deux surfaces principales du réflecteur est dotée d'un système de couches minces au plan optique.

6. Projecteur à lentille de Fresnel selon l'une quelconque des revendications précédentes, dans lequel la surface réfléchissant la lumière présentant de préférence des surfaces partielles ou des facettes, est structurée en diffusant la lumière et aucune, une ou deux surfaces de la lentille de Fresnel sont structurées en diffusant la lumière en supplément du disque diffuseur.

7. Projecteur à lentille de Fresnel selon l'une quelconque des revendications précédentes, **caractérisé en ce que** le réflecteur, la lentille de Fresnel et/ou le disque diffuseur sont recouverts au moins sur un côté.

8. Projecteur à lentille de Fresnel selon la revendication 7, **caractérisé en ce que** le revêtement de la lentille de Fresnel comporte un système de couches à interférence diélectrique, qui modifie le spectre de la lumière traversante.

9. Projecteur à lentille de Fresnel selon l'une quelconque des revendications précédentes, **caractérisé en ce qu'**au moins l'une des deux surfaces principales du réflecteur est recouverte avec du métal, de préférence de l'aluminium.

10. Projecteur à lentille de Fresnel selon l'une quelconque des revendications précédentes, **caractérisé en ce que** la lampe est une lampe à incandescence, en particulier une lampe halogène, une lampe à diode luminescente, une zone de diodes luminescentes ou une lampe à décharge de gaz.

11. Projecteur à lentille de Fresnel selon l'une quelconque des revendications précédentes, **caractérisé en ce qu'**un réflecteur auxiliaire est disposé entre la lentille de Fresnel et le réflecteur.

12. Projecteur à lentille de Fresnel selon l'une quelconque des revendications précédentes, **caractérisé en ce que** la lentille de Fresnel est prétendue sur sa surface, de préférence prétendue thermiquement.

13. Ensemble d'éclairage comprenant un projecteur à lentille de Fresnel selon l'une quelconque des revendications précédentes de 1 à 12 ainsi qu'un bloc d'alimentation ou un ballast électrique associé.

14. Utilisation du projecteur à lentille de Fresnel selon l'une quelconque des revendications 1 à 12 ainsi que d'un ensemble d'éclairage selon la revendication 13 pour la médecine, l'architecture, le cinéma, le théâtre, le studio et la photographie.

15. Lampe de poche comprenant un projecteur à lentille de Fresnel selon l'une quelconque des revendications de 1 à 12.
